# EUROPEAN PATENT APPLICATION

(11) **EP 1 858 263 A1**
(43) Date of publication of application: **21.11.2007**
(21) Application number: 06425329.7
(22) Date of filing: 15.05.2006
(51) Int. Cl.: H04N 7/24

(54) **Method of and system for providing users of a communication network with a personal multimedia recording facilty**

(71) Applicant: Siemens S.p.A., 20126 Milano (IT)
(72) Inventor: Bacchi, Alessandro, 20138 Milano (IT); Monticelli, Emanuel, 20025 Legnano (IT); Zerbini, Massimo, 26100 Cremona (IT); Vanzulli, Marco, 21053 Castellanza (Va) (IT); Burley, Quentin, 20156 Cinisello Balsamo (MI) (IT)
(74) Representative: Giustini, Delio

(57) **Abstract**

A method of implementing a personal multimedia recording service for users of a communication network includes a continuous recording of live multimedia contents simultaneously with an encoding thereof in a form suitable for delivery through the communication network. Recording is automatically performed, independently of users' requests, by a system (MDS) providing for said delivery, and results in the storage, and consequent availability to said users (MP1...MPn), of the complete content of each presentation in a storage unit (LR) belonging to the system (MDS) itself. The users (MP1...MPn) access to said storage unit (LR) for having a stored content played back on demand and without any constraint imposed by the progress of the recording. A system for implementing the method is also disclosed.

## Description

### Field of the invention

The present invention refers to multimedia services provided to users of a communication network, and more particularly it concerns a method of and a system for delivering live multimedia contents to said users so as to provide such users with a personal recording facility.

### Background of the Invention

At present, telecommunications operators co-operate with television companies, film producers or other producers/distributors of multimedia contents to provide a convergence of the respective services.

Users of both mobile and fixed telecommunications networks are offered the possibility of receiving multimedia contents (often referred to as "presentations"), both in pre-recorded form and as live programmes (live streaming). An example of the first kind of service is Video on Demand; examples of the second kind of service are Mobile TV, IP (Internet Protocol) TV, DVB-H (Digital Video Broadcasting - Handset), etc.

Video on Demand (VoD) allows a user to choose among a certain set of pre-recorded contents and to start playing when most suitable for him/her. A limitation of Video on Demand is that the users are to wait that the service provider has completed recording of a content and has actually made a newly recorded content actually available before the users can enjoy it. Thus, users can only enjoy "past" contents and not "current" contents. Moreover, the contents the user can choose are rather limited.

Live streaming can provide the user with a wide choice of presentations (e.g. the whole of the programmes on the TV channels) that can be enjoyed while they are being generated: yet, of course, live enjoyment entails that the user in turn is in condition of receiving the live presentation. Since this is not always possible, e.g., because the user is at work, users could be interested in recording certain contents in order to enjoy them later on, as is conventionally made with video recording for home television. Recording live multimedia contents however gives rise to a major problem, especially in case of mobile users. Indeed, recording physically takes place on the handset, and hence recording capability is strongly dependent on the handset storage capacity, which at present is severely limited. Even recording in compressed form is not sufficient to obviate to this drawback. On the other hand, equipping or connecting the handset with some supplementary memory component is often impossible and, generally, this would be an expensive solution.

Besides the storage capacity problem, handset recording suffers from further limitations. By way of example, we may mention: the handset must be on, so that, in case of battery-powered handsets, there is the risk the battery becomes discharged during recording; radio coverage problems linked to the mobility of the user during the handset recording, etc..

### Summary of the Invention

Thus, it is an object of the present invention to provide a method and an apparatus for delivering multimedia contents to users of a communication network so as to provide them with a personal multimedia recording facility, which method and system allow overcoming the above drawbacks and limitations.

In a first aspect, the invention provides a method of implementing a personal multimedia recording service for storing contents of live multimedia presentations delivered to receiving users through a transport network, the method comprising:
- continuously recording said contents simultaneously with an encoding thereof in a form suitable for delivery through the transport network, said recording being automatically performed, independently of users' requests, by a system providing for said delivery and resulting in the storage, and consequent availability to said users, of the complete content of each presentation in a storage unit belonging to the system itself;
- accessing by the users to said storage unit for having a stored content played back on demand and without any constraint imposed by the progress of the recording, whereby a user can request enjoying past, already completely encoded presentations or parts thereof, ongoing presentations or parts thereof, or presentations scheduled for future delivery.

In a second aspect, there is provided a system for implementing the method, comprising:
- at least one set of encoders for encoding said contents as requested for delivery through said transport network; and
- at least one multimedia server for receiving the encoded live contents from said at least one encoder set and delivering them to the users;
   said system further comprising a recording and storage apparatus connected between said at least one set of encoders and said at least one multimedia server, in parallel with a path for live delivery of said presentations to the at least one multimedia server, and arranged to:

- continuously receive the encoded contents of said live presentations while they are being output from said at least one encoder set;
- store automatically and independently of users' requests, in a storage unit internal to said recording and storage apparatus, the complete content of each presentation; and
- make available the stored contents to the users on demand, without any constraint imposed by the progress of the recording.

The invention also concerns a communication system comprising a plurality of multimedia user players and the system of the invention for delivering contents of live multimedia presentations to players of receiving users through a transport network and for providing said users with a personal multimedia recording facility

Note that live streaming services already provide for buffering the streams being transmitted. Buffering serves to recover the system latency in real-time presentations and possible differences between the transmission and reception clocks. Moreover, in case of certain differentially encoded streams, like MPEG-4 or 3GPP streams, which include the so-called Key-Frames (3GPP I-Frames) used by the decoder to obtain the successive frames from the encoded differences only, buffering allows starting the delivery in correspondence with a Key-frame (I-frame), to prevent artefacts in the displayed image. In any case, buffering only concerns a limited number of frames of the streams of a content being transmitted, and not the whole content, and it does not keep such content available to the users for future enjoyment.

### Brief description of the drawings

Further objects, characteristics and advantages of the invention will become apparent from the following description of preferred embodiments, given by way of non-limiting example and illustrated in the accompanying drawings, in which:
- Fig. 1 is a schematic block diagram of a conventional system for delivering multimedia contents to users of a telecommunication network.;
- Fig. 2 is a schematic block diagram of a system according to the invention;
- Fig. 3 is a diagram explaining the difference between the invention and the conventional Video on Demand and live streaming techniques;
- Fig. 4 is a block diagram of the virtual recorder;
- Fig. 5 is a schematic representation of the contents of the memory of the virtual recorder for a channel and a programme;
- Figs. 6 to 12 are flow charts of the operation of the invention in a number of possible scenarios;
- Fig. 13 shows the display of a player during exemplary scenarios of use of the invention.

### Description of the preferred embodiments

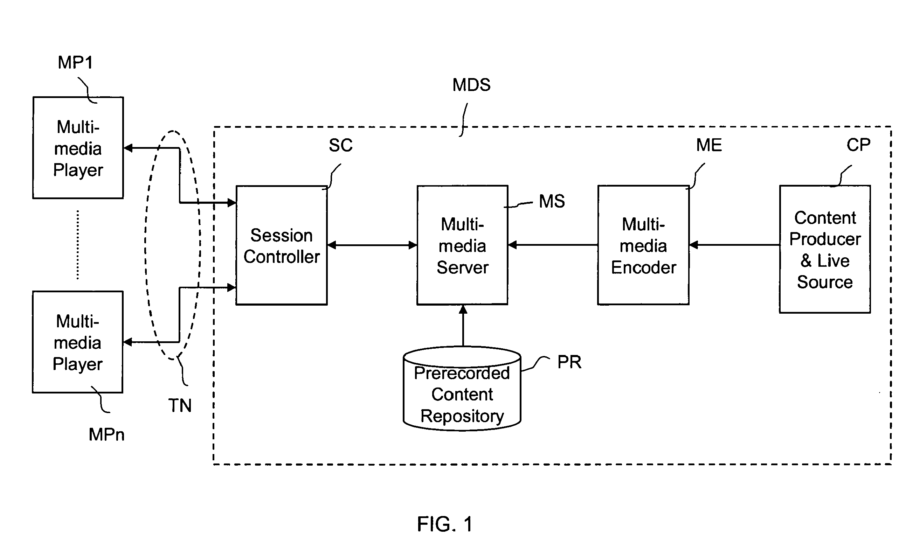

A multimedia delivery system according to the state of the art, providing for both video on demand and live streaming services, is depicted in Fig. 1. Hereinafter, it will be assumed that the delivery service is based on the IETF (Internet Engineering Task Force) standard protocols, namely RTSP (Real Time Streaming Protocol), RTP (Real Time Transport Protocol) and RTCP (Real Time Transport Control Protocol). See e.g. the documents IETF RFC (Request For Comments) 2326, "Real Time Streaming Protocol (RTSP)", H. Schulzrinne, A. Rao, and R. Lanphier, April 1998, and IETF RFC 3550, "RTP: A Transport Protocol for Real-Time Applications", H. Schulzrinne, S. Casner, R. Frederick, and V. Jacobson, July 2003. The architecture shown is quite general and is representative of substantially all solutions based on such protocols.

The users, shown by their multimedia players MP1...MPn, have individual access, through a wireless or wireline (optical, coaxial, etc.) transport network TN, to one or more multimedia servers MS belonging to a multimedia delivery system MDS. Only one server is shown, even if, as known, different streams of a same presentation (e.g. the audio and video track) may originate from different servers. Different players can be connected to multimedia delivery system MDS through different transport networks. Depending on the nature of the player, transport networks TN may include wireless communication networks (e.g. the UMTS, Universal Mobile Telecommunications System, the GPRS - General Packet Radio Service - network, a wireless local or metropolitan area network, etc.) or wireline communication networks (e.g. the PTSN Packet Switched Telephone Network, a broadband IP network...). The kind and the organisation of the transport networks have no interest for the present invention.

Server MS is connected on the one side to a content repository PR storing pre-recorded contents, such as movies, video and audio clips, etc., that are assumed to be also pre-encoded as requested for use in RTSP/RTP/RTCP based services. On the other side, server MS is connected to a number of multimedia encoders ME receiving live multimedia contents, such as television programmes, from live sources and content producers, schematised together by block CP, and encoding such contents as requested for live delivery. Only one encoder ME and one producer/source CP are shown for sake of simplicity, even if a server MS will generally receive the encoded multimedia streams generated from a set of encoders.

In some solutions, players MP1...MPn directly access multimedia server(s) MS through network TN. In such case, server MS will handle both signalling (RTSP) and transport and control (RTP/RTCP). In alternative solutions, like that depicted in fig. 1, network TN connect players MP1...MPn to a session controller SC, which is in turn connected to server(s) MS. Session controller SC processes the users' requests and establishes the proper delivery session between multimedia delivery system MDS and players MP, by allowing also players MP to switch among different contents. Moreover, SC can be entrusted with administrative checks, e. g. check on users' authorisation, on payment for receiving a specific content etc. In general it can be said that SC is in charge of transport and control, and MS of the signalling. In further alternative solutions a single unit can embody the functions of video server and session controller. This single unit could even perform the encoding. However, hereinafter session controller SC, multimedia server MS and multimedia encoder ME will be referred to as functionally distinct units.

A solution like that shown in fig. 1, intended to deliver multimedia contents to users of a mobile network, is implemented in commercial products available from Siemens AG under the name "MDS" (in particular, in the current release MDS 3.5).

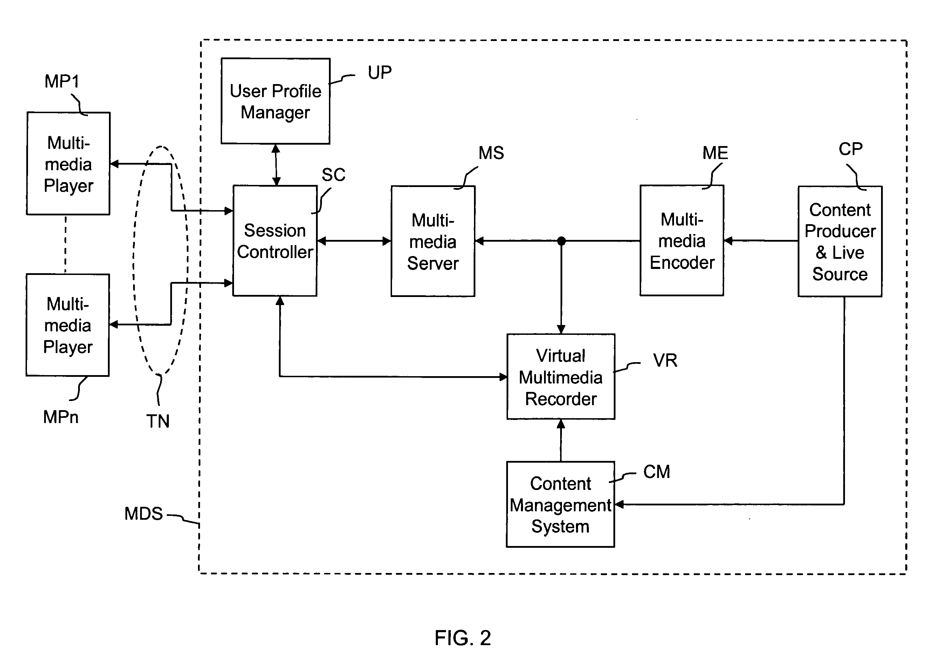

Fig. 2 shows a block diagram of the delivery system of the present invention, which provides the user with a personal multimedia recording facility that solves the problems of handset recording. In Fig. 2, the pre-recorded content repository PR is no longer shown, since the invention concerns recording of live contents. For sake of simplicity, hereinafter reference will be made to television programmes as the live contents to be recorded.

According to the invention, a recording and storage unit VR (hereinafter referred to as "virtual recorder") is connected between encoder(s) ME and session controller SC, to record and store, simultaneously with encoding, all audio and video streams produced by a set of encoders ME. Note that the architecture is readily scalable, by providing different virtual recorders VR each connected to an own set of encoders ME and/or by providing one or more spare recorders.

The streams to be stored are made available to VR through the multicast outputs present of encoders ME. The content of each encoded programme is wholly stored in virtual recorder VR. The stored programmes can remain permanently available for the users; in the alternative the stored contents could be kept available for a predetermined period, possibly different for different programmes, set by the service provider, after which they could be transferred to a different repository, similar to PR (Fig. 1) and made accessible with the modalities of a conventional video/audio on demand service.

Recording takes place irrespectively of any request by the users, that is RTP/RTCP packet transmission from encoder(s) ME to VR is always active; enjoyment by the users is on the contrary on demand, yet without any time constraint with the recording. In other words, the recorded contents are available to the users since the very beginning of the recording (apart from the convenience of actually starting delivery to the users from a key-frame or I-frame), and the user can request "recording" (the meaning of the "record" request will become apparent hereinafter) at any moment before or at the start of a programme or during a programme (like in a conventional video recorder connected to the home television set), and can request playing not only after the end of the recording, but also while recording is in progress.

The programmes stored in virtual recorder VR are associated with indexing information for retrieval by the users. Besides a file name and possibly a description of the file contents, like in VoD services, the indexing information according to the invention also include the identity of the channel on which the programme has been transmitted, a time index related with a recording request, as will be better explained below, and possibly a reference to the programme scheduling times (that is the beginning and end times of a show). Creation of the indexing information related with the programme contents and scheduling times is at least in part task of a content management system CM, which can get the necessary information from so-called SDP (Session Description Protocol) files (i.e. files containing information useful to describe the characteristics of a multimedia stream and organised as disclosed document IETF RFC 2327 "SDP: Session Description Protocol", M. Handley, V. Jacobson, April 1998), or by dialoguing with encoder(s) ME, etc. Recording time index is on the contrary made available through session controller SC.

In summary, the key features of recording carried out by VR are:
- recording and storage are features of service network MSN, and not of the user's player MP1...MPn; thus the problems concerning the limited storage capacity of the users' terminals and the need for having the terminal on at the transmission time are solved;
- the content is automatically recorded by the network, not on request; it is the enjoyment that takes place on request;
- recording and storage take place on line, that is they simultaneously with encoding, and enjoyment can concern "past" programmes (i.e. programmes that have already come to an end) or ongoing programmes; also enjoyment of future programmes can be requested.

Such features allow providing the users with a very flexible "virtual recording service", in which recording is performed for all programmes/contents offered by producers that adhere to the service, so that a much wider choice than in VoD service is available to the users. The "recording request" by a user has no impact on the recording procedure and is merely a communication, to delivery system MDS that the user is interested in enjoying a certain programme. The system will keep record of the request, including the request time, and will associate it with the user, to provide him/her with the specific contents when the users will request playback of a programme. The association can be performed in a module of SC or in a separate user profile manager UP, where a proper database of the requests is created.

By the playback request, a user can ask that the programme be played from the "recording" time or from the beginning. While the programme is being played, the user can stop playback and go back to a previous part of the programme (replay). Playback can be requested on different devices (e.g., on a handset, a PC, a TV set...), so that it can take place with different codings, bit rates etc.

On the other side, by exploiting the users' request data base, delivery system MDS could also provide for building personal archives for the users, or can add customised advertisements when a playing session is started.

Further, the network has a complete control on playback, in terms of authorisation verification, charging etc.

Also charging of the service to the users can be very flexible: the user can be charged when requesting recording or at each play (or replay), or a sort of subscription could be envisaged.

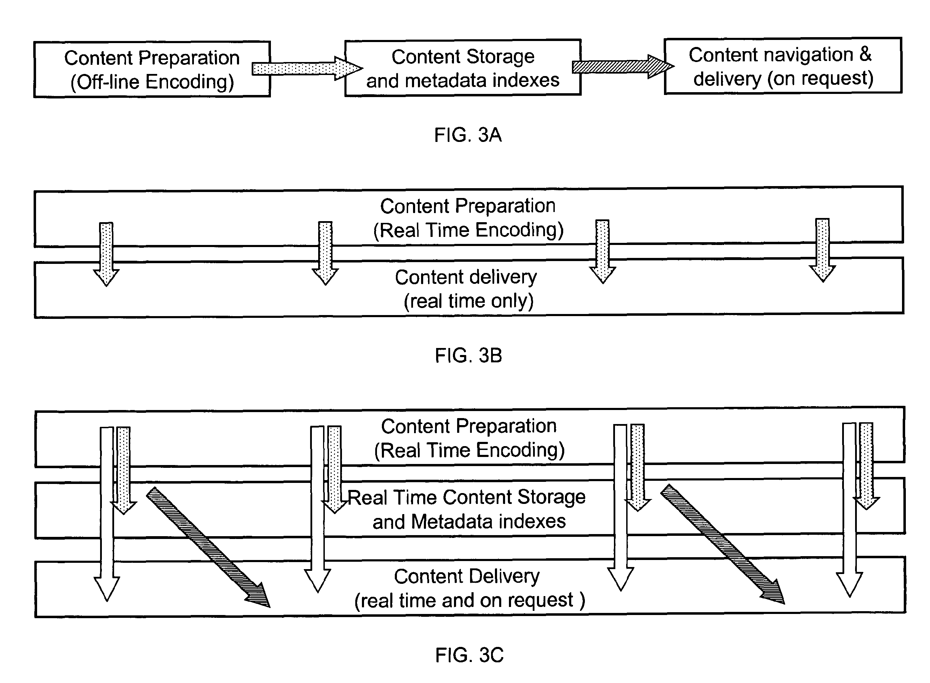

Fig. 3 summarises the differences between the principles of Video on Demand (Fig. 3A), Live Streaming (Fig. 3B) and Virtual Recording according to the invention (Fig. 3C). The drawing makes it apparent that:
- content preparation (encoding), storage and enjoyment (content navigation and delivery) are successive steps in VoD; encoding takes place off line;
- content preparation and enjoyment only are provided in conventional live streaming: encoding takes place on line and enjoyment can only occur simultaneously with encoding;
- virtual recording on the contrary provides for a storage simultaneous with on line content preparation, and content delivery can occur both in real time and on request.

Note that even if metadata indexes are mentioned both for VoD and for virtual recording of the invention, the indexes are different: in VoD, indexes must only be related with a file name and, possibly, a file content; in virtual recording, the indexes must allow identifying the channel on which a programme is being transmitted and include time information for file retrieval by the users on a time basis.

An index is also used in the above-mentioned MDS system, in particular to allow a fast switching between different live contents as disclosed in International Patent Application PCT/EP 2005013753, in the name of the same Applicant.

Claims 1 and 11 of that application respectively recite:
"A method for switching from:
   - a first RTSP streaming session established between a multimedia player and a multimedia server for delivering to the player first multimedia streaming contents according to the RTP/RTCP protocols, upon a switching request message sent to said multimedia server by said multimedia player,
   - to a second streaming session established for delivering second multimedia streaming contents according to the RTP/RTCP protocols from said multimedia server to said multimedia player,
      characterized in that: includes the following steps:
   - coding said first and second multimedia streaming contents with equal coding rule and format and keeping them running by said multimedia server;
   - closing said first session and establishing said second session on the basis of the information content of said switching request message in parallel to the sending of said second multimedia streaming contents to the multimedia player."
   and
   "A communication system operating according to the method of the claim 1 including at least a multimedia player connectible to a multimedia server through a transport network, both the multimedia player and the multimedia server including means arranged to set up RTSP sessions for delivering multimedia streaming contents according to the RTP/RTCP protocols from said multimedia server to said multimedia player and tear down the established sessions, and the multimedia player including means for sending a switching request message to said multimedia server in order to close an actual RTSP session and open a new RTSP session for getting multimedia contents from a new stream, characterized in that said multimedia server includes a streaming switching processor in its turn including:
   - first means arranged for kept always running a given number M of multimedia streams coded with equal coding rules and format;
   - second controllable means for selecting one out of M of said always running multimedia streams and forwarding the selected stream to said multimedia player;
   - third means arranged for receiving said switching request message and commanding said second means to select and forward the new multimedia stream in parallel to the operation of said means to tear down said actual RTSP sessions and establish said new one".

In such known method and system, which use the Key-frames as mentioned above, the index only serve to identify such Key-frames.

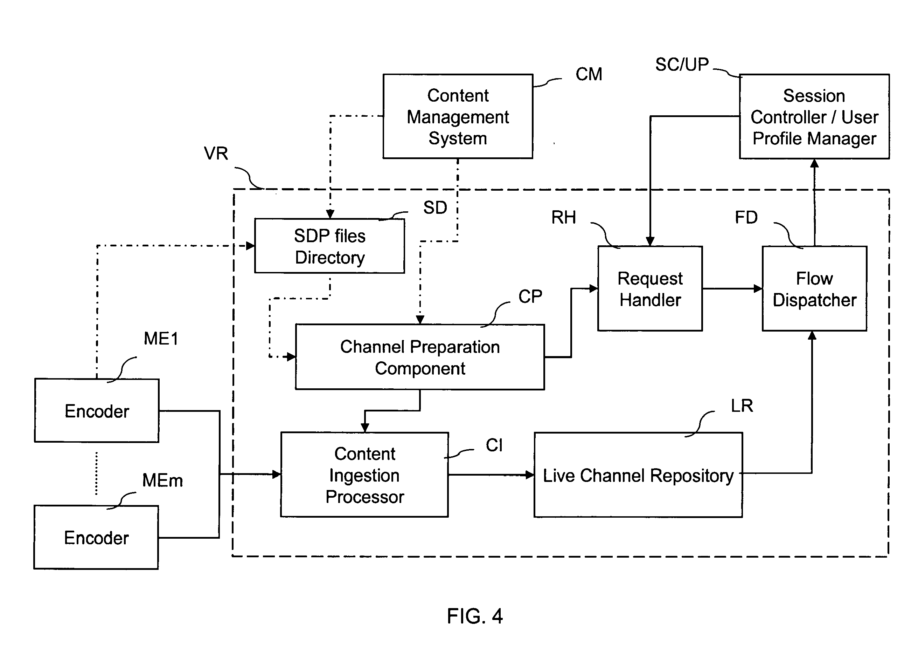

Fig. 4 shows in more detail the architecture of virtual recorder VR. For sake of greater clarity, content management system CM and session controller SC are also shown. Also a plurality of encoders ME1...MEm is shown, which e.g. supply virtual recorder VR with the programmes of different channels.

A content ingestion processor Cl continuously captures RTP/RTCP audio and video packets multicast by encoders ME1...MEm. Content ingestion processor Cl is connected to a channel preparation component CP, which provides information about what is to be actually recorded, such as TV channels which are available for virtual recording, how long recording for each channel is to occur, indexing information (e.g. contents, time scheduling...). CP can get such information from a unit SD and/or by using commands from content management system CM. In the illustrated embodiment, unit SD stores a directory of SDP files and passes such files to CP. In case of channel preparation from a command by CM, the command contains, among other, the channel identity and content description information (e.g., SDP information); the latter can be obtained from the encoders, as SDP files, etc. It is however to be appreciated that use of SDP is only an example: what is important is that all necessary information is present. Channel preparation component CP is also entrusted with cancellation of channels from the service, again by using SDP files or upon command for content manager CM.

The dash-and-dot line connections between encoders ME, content management system CM, SDP files directory SD and channel preparation component CP denote the existence of various alternative ways of providing channel preparation component with the necessary data.

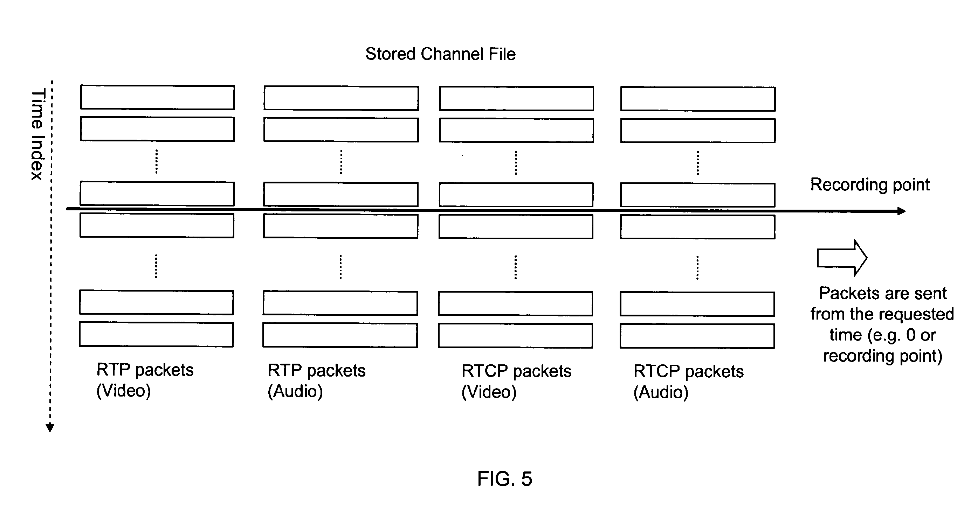

Content ingestion processor Cl writes the indexed RTP/RTCP packets into the actual storage unit (Live Channel Repository) LR at addresses built from the scheduling data, i.e. the channel and the scheduling time. Fig. 5 schematically shows a preferred embodiment of the invention, given by way of non limiting example, and in particular shows file in LR, and shows the association of the file with a time index for retrieval on a channel/time basis. The recording point, even if indicated, is not directly stored in LR, but in SC or UP (Fig. 2), and serves for the playback phase.

Coming back to Fig. 4, live channel repository LR is read by flow dispatcher FD that, in turn, transfers the packets read to session controller SC for the delivery to the requesting user. Substantially, FD provides for starting/stopping the sessions, multiplexing the RTP packets read from repository LR and for managing the RTCP packets send and receive operations.

Flow dispatcher RD receives the information for reading a file, or a part thereof, from a request handler RH which uses the information passed by session controller SC and by channel preparation component CP for building the reading address in repository LR.

In practice, each recording request generates, in the user profile database in session controller SC or user profile manager UP, an item identified by the data pair "channel ID, recording time". That data pair is shown to the user when he/she is to request playback. By processing he playing request, session controller SC will provide RH with the channel identity and the recording time in addition to the indication on whether playback is requested from the recording time or from the beginning of a programme. By using such information and correlating it with the information supplied by channel preparation component CP, RH can then control FD so that the latter accesses to the proper location in repository LR where reading of the packets is to start.

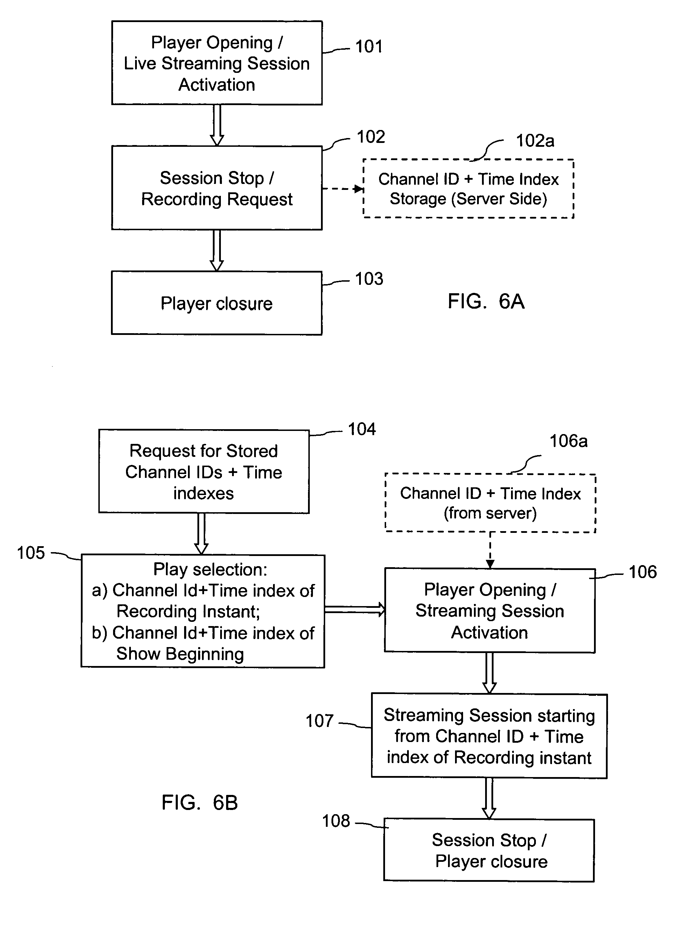

Some exemplary scenarios of personal multimedia recording according to the invention are now disclosed with reference to the flow charts of Figs. 6 to 12. The flow charts show the user's procedures, and part A concerns recording, as it is meant here with reference to a user, and part B concerns playing. The indication "server" is intended as opposed to "client", without any specific reference to the units concerned in the operation indicated. Moreover, terms "player opening" and "player closure" refer to the client's application part implementing the streaming session.

### Scenario 1: Recording and playing from recording instant (Figs. 6A, 6B)

This scenario concerns a user that is to stop watching a certain programme and is interested in viewing, at a later moment, only the programme portion he/she has missed.

As shown in Fig. 6A, at step 101 the user opens his/her player and activates a live streaming session. At step 102 the user stops the session and sends the recording request. By such a request the "server" (in practice, session controller SC and user profile manage UP, if any, see fig. 2) will be communicated the channel identity and the time instant at which recording has been requested ("recording time"). Such a recording time is the time index indicated in block 102a and communicated to the server side. At step 103 the user can close his/her player.

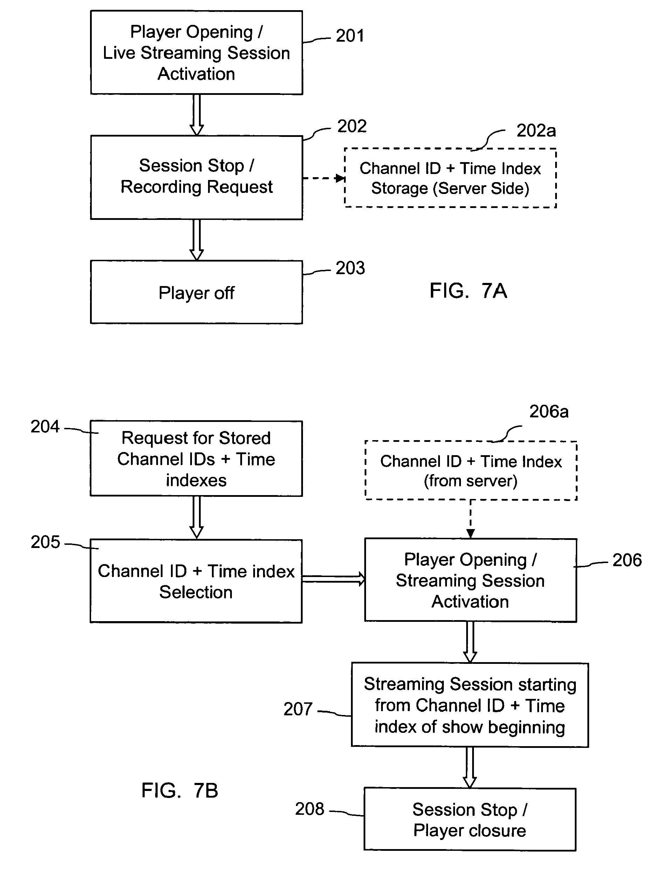

In the playing session (Fig. 6B), at step 104 the user requests the situation of the recordings he/she has requested. At step 105 he/she is shown the list of the channel identities and of the relevant recording times and is invited to select one of them. Note that generally the system will propose the user the choice between playing from the recording instant or from the programme beginning. This possibility is expressly indicated only in the present Figure, whereas, for sake of simplicity, the flow charts in Figs. 7 to 12 generally mention a "Channel ld + Time index selection" In the present case, the user will select "playing from the recording instant" and, consequently, at step 106 the player is opened and activates the streaming session, recovering from the system (step 106a) the channel Identity and the proper time index of the recording instant. Then at step 107 the session is actually started from that instant and the packets of the concerned channel are delivered to the player. At step 108 the session stops and the player can be closed.

### Scenario 2: Recording and Playing from the programme beginning (Figs. 7A, 7B)

In this second scenario the user that had to stop watching the programme wishes to see again the whole programme. The recording phase and starting step 204 of the playing phase are the same as step 101 to 104 in Fig. 6. In step 205, the "Channel ld + Time index selection" is now the selection of watching the programme from the beginning. After player opening and streaming session activation in step 206, the beginning of the programme is identified by using the time index recovered from the server side (step 206a) and, at step 207, the player starts playing the programme from the beginning. The fact that playback is to start from a time point in the programme different from that at which recording was requested does not create any problem, since the whole of the programme is recorded and kept available for the users.

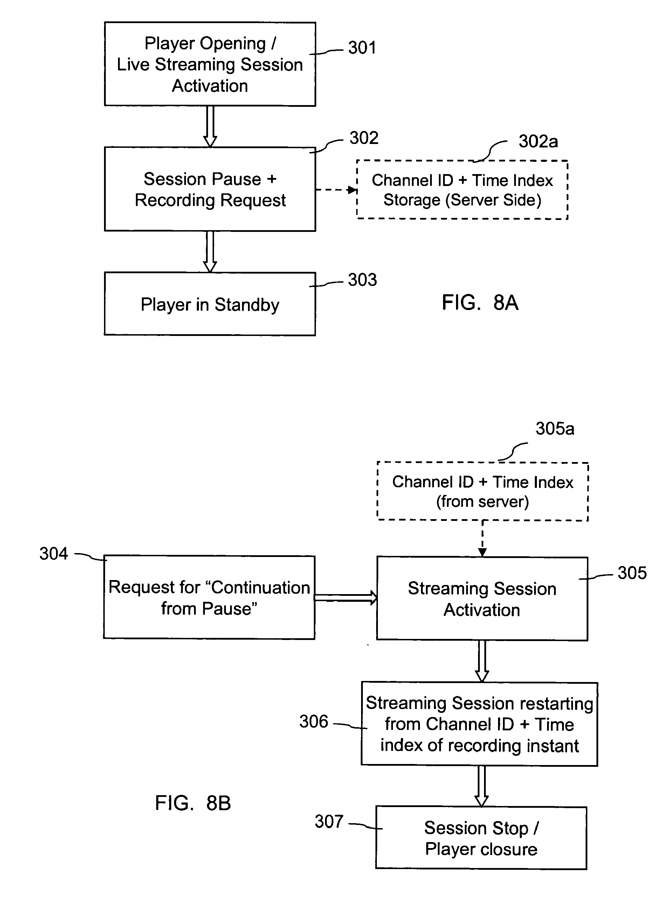

### Scenario 3 : Pausing and recording, and playing from recording instant (Figs 8A 8B)

This scenario concerns a user that temporarily suspends watching the programme. In the recording phase, step 301 is the same as steps 101, 201 of Figs. 6A, 7A. At step 302, the user pauses the session and requests recording, similarly to steps 102, 202, and then he/she sets the player in stand-by (step 303). When the user is ready to resume the session, he/she will request continuation from the pause (step 304). This request has the same effect as a request of playing from the recording instant, so that the subsequent steps 305 - 307 are identical to steps 106 to 108 in Fig. 6. The playing phase can start even if the programme paused has not yet finished.

A similar procedure to those described above is envisaged when the user detects that he/she has missed the start of a programme. Upon activating a live streaming session, the user requests recording and then he/she can select "play from the beginning", without waiting for further events.

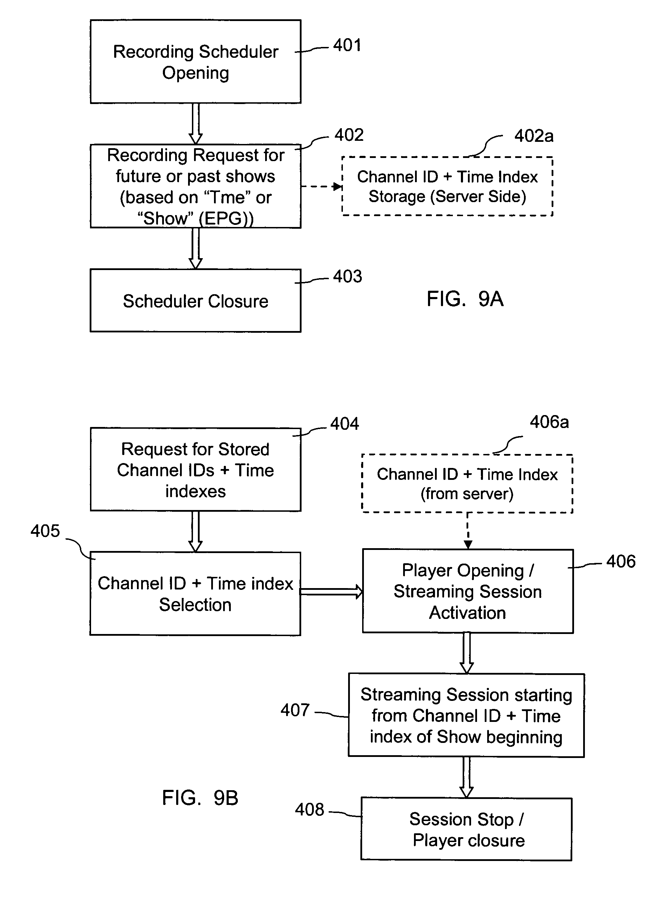

### Scenario 4: Recording scheduler (Figs. 9A, 9B)

This scenario relates to a user that detects that he/she has missed a programme or that knows in advance that he cannot watch a programme that is scheduled at a future time. The user selects in the service menu a scheduling option (step 401, "Recording scheduler opening"), which allows selecting a particular channel identity and time, as before, or scrolling through an electronic programme guide (step 402). As in the previous cases, the server stores a channel identity and a time index (step 402a), the latter including here information also on the scheduling time. Thereafter, the user can close the scheduler (step 403): The playing phase (steps 406 to 408) is quite similar to that of scenario 2.

Note that in all scenarios considered recording and playing are not bound to the use of a same user's device and hence of a same transport network. The user can schedule recording e.g. through a mobile handset, and then he/she can request playing on a large screen television set, connected to a broadband IP connection (IP TV modalities). Thus, convergence of fixed and mobile networks is allowed.

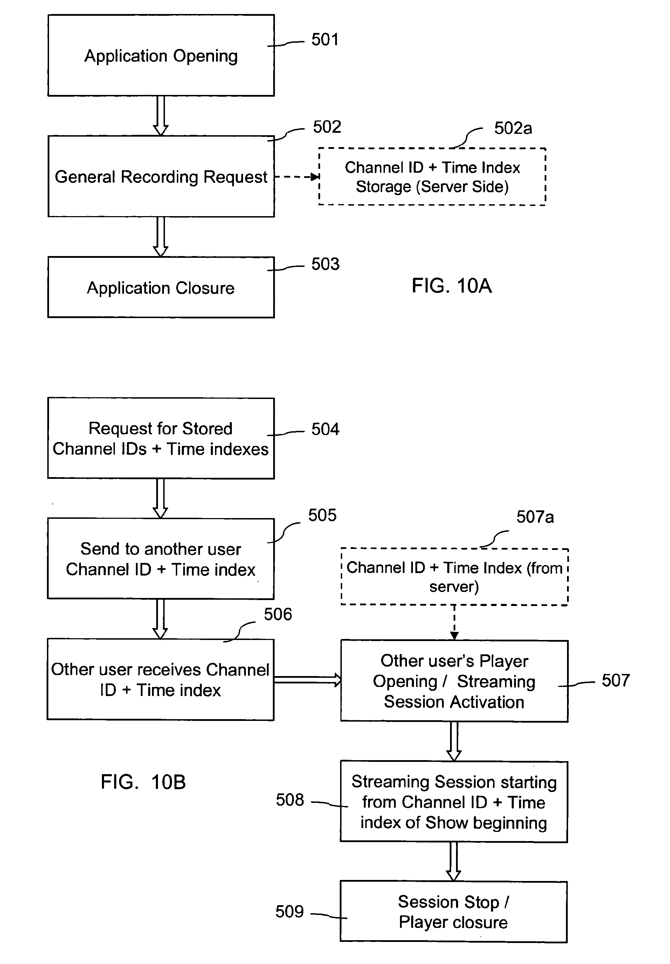

### Scenario 5: Sharing and playing recorded sessions (Figs. 10A, 10B).

Virtual TV recording also allows users to share a recorded programme with other users.

The recording phase is represented here in quite general manner by the opening of the application (step 501) and the recording request (step 502), after what the application can be closed (step 503). Those operations are carried out by a first user.

In the playing phase, the first user requests as before the list of recorded contents (step 504). Then, he/she communicates to a second user the channel identity and the time index of the programme he/she desires to share (step 505). Communication can take place with any method, e.g. using Short Message Service (SMS), Instant Message Service (IMS), e-mail, etc. After having received such data (step 506), the second user can activate the streaming session (step 507), which will start for instance from the programme beginning (step 508).

Also the first user can play the recorded programme simultaneously with the second user, so that both users can discuss the programme while watching it.

Also here, media encoded profiles and transport network used for playing by the second user can be different from those corresponding to the request for recording and/or the request for the recorded contents lists by the first user.

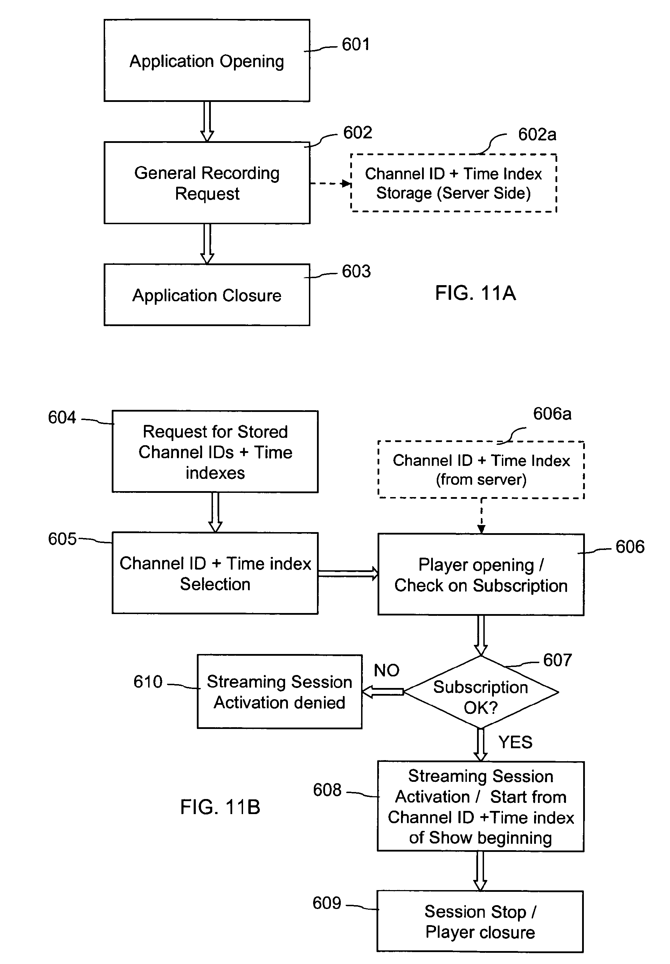

### Scenario 6: Encrypted recorded sessions (Figs. 11A, 11B)

Any of the above scenarios can concern encrypted contents, available only for subscribers. No particular check is made in the recording phase since recording is independent of users' requests. The recording steps 601 - 603 in Fig. 11A are indicated in general form, like steps 501 to 503 in Fig. 10A. In the playing phase, things proceed as in the case of non-encrypted channels until the user is actually to request playing (steps 604, 605). After selection of what has to be played, the check on the subscription is made (step 606) and the streaming session will be allowed only to people having subscribed the channel concerned (steps 607, 608), otherwise the streaming session activation will be denied (step 609).

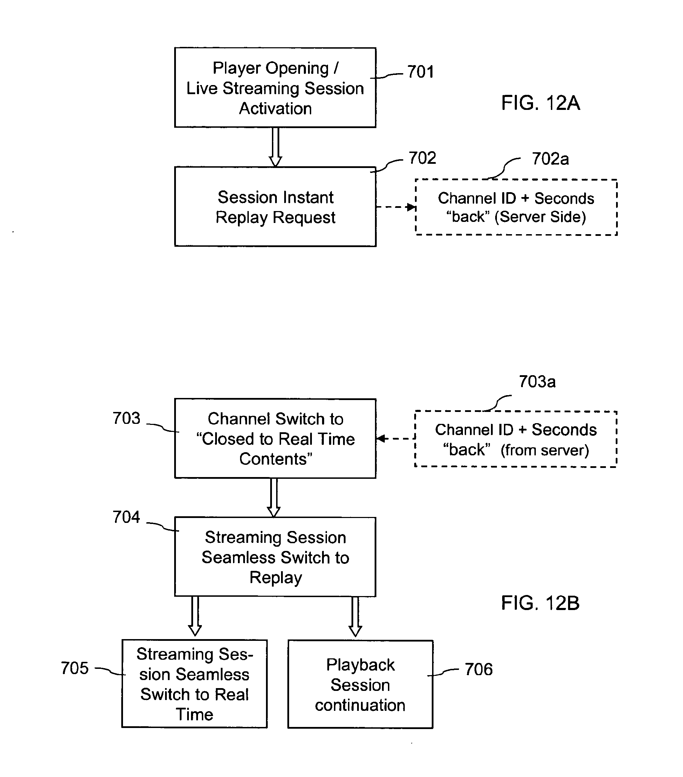

### Scenario 7: Instant replay (Figs. 12A, 12B)

The lack of any time constraint between playing and recording allows also instant replay by the user (and not only by the direction) of scenes of a live programme being transmitted.

In this case, after having activated the live streaming session (step 701), the user requests instant replay (step 702), indicating also the desired "back" period (e.g., some seconds). That instant replay request is in practice a combined pause, recording and playing request, where the time index also indicates the desired "back" period (step 702a).

Upon receiving such a request, the system provides for a channel switch to a condition of "closed to real time content" (step 703) and for a seamless switch of the streaming session to the recorded content corresponding to the indicated back time (step 704). Seamless switch means changing the content of the session, without closing the session itself.

This operation takes advantage of the fast switching modalities disclosed in International Patent Application PCT/EP 2005013753 mentioned above.

Note that the session referred to in claim 1 of that previous patent application is the session towards the server, whereas the session referred to in the flow chart of Fig. 12 is the session towards the client.

After having started replay, two options are possible:
- the system provides for an automatic seamless switch to the real time content after a configurable time (step 705); or
- the user continues watching the recorded content, without returning to the live session (step 706), that is, things proceed as in the case of playing from the recording instant.

If server MS and session controller SC in the architecture shown Fig. 2 are actually separate units, they could be connected together and to encoders ME1...MEm as shown in Fig. 3a of that application: in such case, for embodying the present scenario, server MS could be entrusted with transport and control of the "real time" streams.

Note that replay might even be requested while playing a recorded content, not only during a live session.

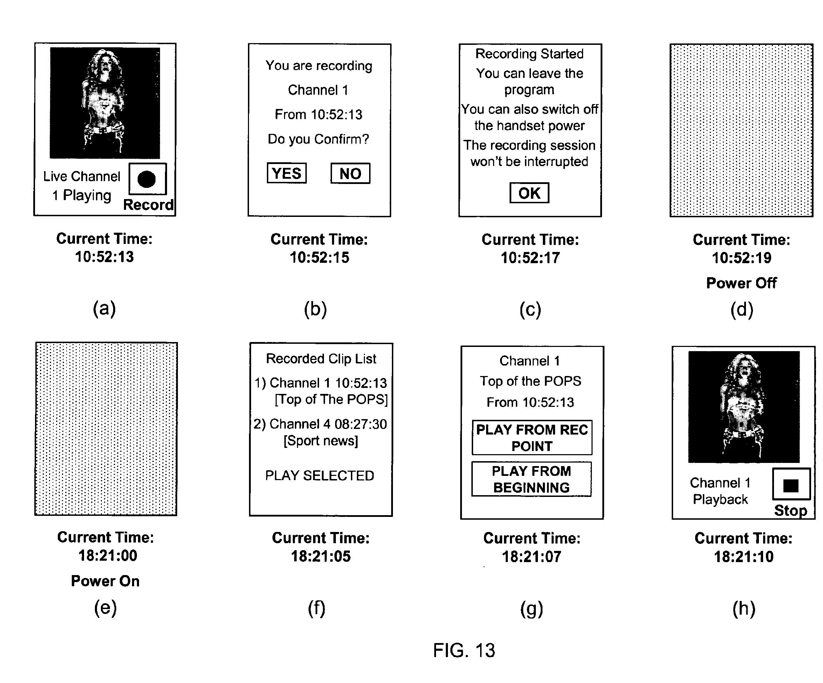

Figs. 13a to 13h show the above-described recording and playing procedures as they appear on the display of a player in case of direct recording, i.e. recording requested while the live streaming is in progress (scenarios 1 to 3).

In Fig. 13(a) the user is watching a programme (live channel 1) and at a certain moment selects "Recording". In fig. 13(b) the user is shown a message indicating the channel for which recording has been requested and the time of the request and asking confirmation. Upon having sent the confirmation requested, the user receives in fig. 13(c) an acknowledgement of the recording request. We point out still once that recording is carried out by the delivery system MDS. and not by the user, so that the confirmation request and the acknowledgement message only serve to update the user's profile in session controller SC or user profile manager UP (Fig. 2). For user friendliness, together with the acknowledgement message, the user can be reminded that even if he/she switches the player off, this does not affect recording. The OK by the user serves to close the session and, in this case, to switch the player off, as shown in Fig. 13(d).

When requesting playing, after having switched on his/her player as shown in Fig. 13(e), the user asks and receives the list of recorded contents, e.g., in the form "Channel Identity, recording time, programme title", as shown in Fig. 13(f), and can select the programme he/she is interested on. After selection, the display will show the channel and the programme and asks the user to select playing from the recording instant or playing from the beginning of the programme (Fig. 13(g)). Upon selection by the user, playing of the requested programme starts (Fig. 13(h)).

It is evident that the above description has been given by way of non-limiting example and that changes and modifications are possible without departing from the scope of the invention.

One of this modification is to store some content on "user base" in order to keep it for long time (theoretically for ever) on user request. A further modification is the "transcoding" with dynamic I-frame generation in order to generate an I-frame from the latest available frames (in real time).

An additional modification is to have different or coinciding time indexes for storage and access by a user to a stored presentation.

## Claims

1. A method of implementing a personal multimedia recording service for storing contents of live multimedia presentations delivered to receiving users (MP1...MPn) through a transport network, the method being **characterised by**:
- a continuous recording said contents simultaneously with an encoding thereof in a form suitable for delivery through the transport network, said recording being automatically performed, independently of users' requests, by a system (MDS) providing for said delivery and resulting in the storage, and consequent availability to said users (MP1...MPn), of the complete content of each presentation in a storage unit (LR) belonging to the system (MDS) itself;
- access by the users (MP1...MPn) to said storage unit (LR) for having a stored content played back on demand and without any constraint imposed by the progress of the recording, whereby a user (MP1...MPn) can request enjoying past, already completely encoded presentations or parts thereof, ongoing presentations or parts thereof, or presentations scheduled for future delivery.

2. The method as claimed in claim 1, **characterised in that** said storage includes associating the contents, in said storage unit (LR), with a first time index for subsequent retrieval of a presentation content by a user on a time basis.

3. The method as claimed in claim 2, **characterised in that** said storage time index is related with a time evolution of the presentation and/or with a scheduling time of the presentation.

4. The method as claimed in any preceding claim, **characterised in that** said storage includes storing each presentation in a memory location an address of which is built starting from information identifying the presentation and information related with a scheduling time.

5. The method as claimed in any preceding claim, **characterised in that** access by a user (MP1...MPn) to a stored presentation entails a previous notification (102; 202; 302; 402; 502; 602; 702), from said user to the delivery system (MDS), to communicate that he/she is interested in having said stored presentation or a part thereof played back to him/her.

6. The method as claimed in claim 5, **characterised in that** it includes, at each notification (102...702), associating in the system (MDS) the user's identity with information identifying a presentation and with a second time index related at least with the instant of notification.

7. The method as claimed in claim 5 or 6, **characterised in that** said access is performed based on a playing request (104, 105; 204, 205; 304; 404, 405; 504, 507; 604, 605; 702) by the user (MP1...MPn) to the system (MDS), which request supplies the system with said information identifying the requested presentation and said second time index, as well as with information identifying a time point in the presentation from which playback is to start.

8. The method as claimed in in any of claims 5 to 7, **characterised in that** a sotred presentation is played back to a user (MP1...MPn) through a transport network different from the network over which said user has forwarded the notification to the system (MDS).

9. The method as claimed in any of claims 5 to 8, **characterised in that** said notification (702) and said playing request (702) are simultaneously sent to the system to request a replay of part of a presentation being delivered to the user, and **in that** said replay includes:
- seamless switching (704) a delivery session, without releasing the session itself, from an original presentation content being delivered at the instant of the notification and playing request (702) to a preceding part of the presentation itself taken from the storage unit (LR); and
- continuing delivery according to the switched session (705) or resuming delivery of the original content, after a predetermined time (706).

10. The method as claimed in any of claims 2 to 4, **characterised in that** it further comprises the communication (505), from a first user (MP1...MPn) having accessed a stored presentation to a second user (MP1...MPn), of said information identifying the presentation and said second time index, and the access (506, 507) by said second user (MP1...MPn) to the same content as that accessed by the first user.

11. The method as claimed in any preceding claim, **characterised in that** said presentations include protected or encrypted presentations whose contents are available only to subscribers, and **in that** the method further comprises checking (606, 607) whether a user sending a playing request for an encrypted presentation is a subscriber to such presentation, and enabling or denying access (608, 609) to the stored presentation depending on the outcome of the check.

12. The method as claimed in any preceding claim, **characterised in that** at least part of said users (MP1...MPn) are users of a wireless communication network.

13. The method as claimed in any preceding claim, **characterised in that** at least part of said users (MP1...MPn) are users of a wireline communication network.

14. The method as claimed in claims 2 and 6, **characterized in that** said first and second time index are coinciding.

15. A multimedia delivery system (MDS) for delivering contents of live multimedia presentations to players (MP1...MPn) of receiving users through a transport network and for providing said users with a personal multimedia recording facility, the system (MDS) comprising:
- at least one set of encoders (ME; ME1...MEm) for encoding said contents as requested for delivery through said transport network; and
- at least one multimedia server (SC, MS) for receiving the encoded live contents from said at least one encoder set and delivering them to the users
**characterised in that** said system (MDS) further comprises a recording and storage apparatus (VR) connected between said at least one set of encoders (ME; ME1...MEm) and said at least one multimedia server (SC, MS), in parallel with a path for live delivery of said presentations to the at least one multimedia server (SC, MS), and arranged to:
- continuously receive the encoded contents of said live presentations while they are being output from said at least one encoder set (ME; ME1...MEm);
- store automatically and independently of users' requests, in a storage unit (LR) internal to the apparatus (VR), the complete content of each presentation; and
- make available the stored contents to the users on demand, without any constraint imposed by the progress of the recording.

16. The multimedia delivery system (MDS) as claimed in claim 15, **characterised in that** said storage unit (LR) is connected to a first processing unit (CP) arranged to supply said storage unit (LR) with indexing information, to be associated with each presentation and including information identifying the presentation and at least a first time index for retrieval of the presentation by a user on a time basis.

17. The multimedia delivery system (MDS) as claimed in claim 14, **characterised in that** it includes writing means (Cl) connected between said at least one set of encoders (ME; ME1...MEm) and said storage unit (LR) and also connected to said first processing means (CP), said writing means (Cl) being arranged to control storage of the content of each presentation in a memory location whose address is built from said identifying information and a scheduling time.

18. The multimedia delivery system (MDS) as claimed in any of claims 15 to 17, **characterised in that** it further comprises a user profile manager (UP), embodied in or connected to said server (SC, MS) and containing a data base arranged to associate, upon notification by a user (MP1...MPn) of his/her interest in having a stored presentation, or part thereof, played back, a user's identity with information identifying the presentation and a second time index related to at least the instant of notification.

19. The multimedia delivery system (MDS) as claimed in claim 17, **characterised in that** said recording and storage apparatus further comprises:
- a second processing unit (RH) arranged to process playing requests from the users (MP1...MPn) and to identify, based on the contents of said data base and on information supplied by said first processing unit (CP), a memory location at which a presentation, or part of a presentation, to be played back is stored and a presentation point from which playback is to start; and
- a reading unit (FD) connected to said storage unit (LR) and to said second processing unit (RH) and arranged to read the presentation content from said storage unit (LR) based on information supplied by said second processing unit (RH).

20. The multimedia delivery system (MDS) as claimed in any of claims 15 to 19, **characterised in that** at least part of said players (MP1...MPn) are connected to the system (MDS) through a wireless transport network.

21. The multimedia delivery system (MDS) as claimed in any of claims 15 to 19, **characterised in that** at least part of said players (MP1...MPn) are connected to the system (MDS) through a wireline transport network.

22. A communication system comprising a plurality of multimedia user players (MP1...MPn) and a multimedia delivery system (MDS) for delivering contents of live multimedia presentations to players (MP1...MPn) of receiving users through a transport network (TN) and for providing said users with a personal multimedia recording facility, **characterised in that** said multimedia delivery system (MDS) is a system as claimed in any of claims 14 to 19.

23. The communication system as claimed in claim 22, **characterised in that** at least part of said players (MP1...MPn) are connected to the multimedia delivery system (MDS) through a wireless transport network.

24. The communication system as claimed in claim 22, **characterised in that** at least part of said players (MP1...MPn) are connected to the multimedia delivery system (MDS) through a wireline transport network.
